Europäisches Patentamt

European Patent Office

Office européen des brevets

(19)

(11) Veröffentlichungsnummer: **0 236 831**
**B1**

(12) # EUROPÄISCHE PATENTSCHRIFT

(45) Veröffentlichungstag der Patentschrift:
24.05.89

(51) Int. Cl.⁴: **F16C 9/00**

(21) Anmeldenummer: 87102552.4

(22) Anmeldetag: 24.02.87

(54) **Geteiltes Radial-Gleitlager für Kraft- und Arbeitsmaschinen, insbesondere Pleuel- und/oder Kurbelwellen-Lager für Brennkraftmaschinen.**

(30) Priorität: 05.03.86 DE 3607273

(43) Veröffentlichungstag der Anmeldung:
16.09.87 Patentblatt 87/38

(45) Bekanntmachung des Hinweises auf die Patenterteilung:
24.05.89 Patentblatt 89/21

(84) Benannte Vertragsstaaten:
ES FR GB IT SE

(56) Entgegenhaltungen:
EP-A- 0 128 746
DE-A- 3 317 784
DE-B- 1 258 657
GB-A- 1 183 045
US-A- 3 449 032
US-A- 3 762 786

(73) Patentinhaber: BAYERISCHE MOTOREN WERKE
Aktiengesellschaft, Postfach 40 02 40,
D-8000 München 40(DE)

(72) Erfinder: Angerer, Siegfried, Freienrieder Weg 2,
D-8904 Friedberg(DE)

(74) Vertreter: Bücken, Helmut, Bayerische Motoren Werke
Aktiengesellschaft Postfach 40 02 40 Petuelring 130 -
AJ-30, D-8000 München 40(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung geht gemäß dem Oberbegriff des Hauptanspruches von der DE-A 3 317 784 aus.

Bei dieser bekannten Bauart ist ein Pleuel für eine Brennkraftmaschine einschließlich des großen Pleuelauges zur Verringerung der Masse aus Leichtmetall gebildet. Zum Ausgleich des Lagerspiels aufgrund des etwa doppelten Wärmeausdehnwertes von Leichtmetall gegenüber dem für den Kurbelzapfen verwendeten Eisenwerkstoff werden Lagerdeckel und Lagerkörper des großen Pleuelauges über aus Eisenwerkstoff gebildete Spannschrauben und Distanzhülsen einander so zugeordnet, daß Lagerdeckel und Lagerkörper in der Trennfuge gegenseitig beabstandet sind. Das Ziel hierbei ist, den Ausgangspunkt der Längenänderung in Richtung der Pleuelachse und damit der wirkenden Kraft von den bisherigen, in der Trennfuge gegeneinander verspannten Trennflächen von Lagerkörper und Lagerdeckel zu verlegen hin zu den mit der Verschraubung zusammenwirkenden Anschlagflächen. Beiderseits der Lagerbohrung der Pleuelachse parallele Bereiche von Lagerkörper und Lagerdeckel können sich somit nur in die Trennfuge hinein ausdehnen, während die zwischen der Verschraubung sich erstreckenden Bereiche von Lagerkörper und Lagerdeckel duch ihre temperaturabhängige Längenausdehnung in Richtung der Pleuelachse das Lagerspiel bestimmen. In der eingangs genannten Schrift ist auch ein gleichwirkender Aufbau für ein Kurbelwellenlager einer Brennkraftmaschine beschrieben.

Der Erfindung liegt die Aufgabe zugrunde, für ein geteiltes Radial-Gleitlager mit selbsttätig temperaturabhängigem Lagerspielausgleich der im Oberbegriff des Hauptanspruches beschriebenen Bauart bei Verwendung von Werkstoffen für das Gleitlager und den Lagerzapfen mit sehr unterschiedlichen Wärmeausdehnwerten eine Lagerspielautomatik zu schaffen, die bei einfachem Aufbau in der Lager-Hauptbelastungsrichtung bei kalter Maschine ein relativ großes Lagerspiel und bei betriebswarmer Maschine ein optimal kleines Lagerspiel ermöglicht.

Gelöst wird diese Aufgabe mit den im Kennzeichen des Hauptanspruches angegebenen Merkmalen. Kern der Erfindung ist, die beiden mit ihren Flanschen in der Trennfuge von Lagerkörper und Lagerdeckel fixierten Lagerschalen aus einem Werkstoff geringer Wärmeausdehnung durch eine quer zur Hauptbelastungsrichtung des Lagers wirkende, erheblich stärkere Wärmeausdehnung von Lagerkörper und Lagerdeckel zu verformen und damit in der hauptsächlichen Belastungsrichtung das Lagerspiel gewünscht klein zu halten. Die betriebsbedingte Temperaturerhöhung des erfindungsgemäßen Gleitlagers ergibt somit eine Zwangsverformung der Lagerschalen, wobei die quer zur Hauptbelastungsrichtung an den Lagerschalen aus den Wärmedehnungen von Lagerkörper und Lagerdeckel wirkenden Kräfte eine Ovalverformung der Lagerschalen ergeben. Durch die Ovalverformung ergibt sich mit steigender Temperatur selbsttätig eine Verringerung des Lagerspiels. Nach einem weiteren Merkmal werden die ovalverformten Lagerschalen jeweils hydraulisch, vorzugsweise mittels Drucköl aus dem Schmiersystem dämpfend abgestützt.

Ein Vorteil der Erfindung ist, daß bei einer kalten Brennkraftmaschine und zähem Schmieröl ein relativ großes Lagerspiel für die Kurbelwelle und/oder das Pleuellager gewählt werden kann, womit die Kaltstartbedingungen wesentlich verbessert sind. Weiter ist von Vorteil, daß bei betriebswarmer Brennkraftmaschine und dünnflüssigem Öl ein optimal kleines Lagerspiel vorhanden ist. Die ovalverformten Lagerschalen ermöglichen dabei in Kraftrichtung eine ölgedämpfte elastische Verformung, die der Laufkultur der Brennkraftmaschine vorteilhafterweise zugute kommt. Mit der Erfindung ist eine Lagerspielautomatik erreicht, die es gestattet, das Lagerspiel an einem minimierten Grenzwert zu halten, womit ebenfalls eine Verringerung der Geräuschentwicklung verbunden ist. Dies wird noch zusätzlich durch die mit der Lagerspielautomatik verbundene Dämpfungsfunktion der Lagerschalen unterstützt. Schließlich ist mit der erfindungsgemäßen Ovalverformung der Lagerschalen sichergestellt, daß damit in der Hauptbelastungsrichtung die Ausbildung eines tragfähigen, dynamischen Ölfilmes nicht gestört ist. Dies erklärt sich gegenüber dem aus der gattungsbildenden Schrift bekannten Gleitlager dadurch, daß mit der Erfindung eine Ovalverformung mit in der Hauptbelastungsrichtung liegender kurzer Achse erreicht wird, deren Maß das Lagerspiel in der Hauptbelastungsrichtung vorteilhaft bestimmt.

Zwar ist aus der DE-C 840 634 für die Lagerung der Kurbelwelle einer Brennkraftmaschine eine Bauart eines Schwimmlagers bekannt, bei der eine Buchse zwischen dem drehenden Zapfen der Kurbelwelle und der Lagerbohrung des Maschinengehäuses mit jeweiligem Radialspiel angeordnet ist, wobei die am Maschinengehäuse drehgesicherte Buchse gegen die Lagerbohrung über einen durch Systemdruck erzeugten statischen Ölfilm abgestützt ist.

Zwar ist weiter aus der US-A 3 762 786 ein für die jeweilige Lagerung von Kurbelwelle und Pleuel geeignetes Schwimmlager anderer Bauart mit einer mit dem jeweiligen Zapfen umlaufenden Buchse mit innerem und äußerem Radialspiel bekannt, wobei die in einer Lagerbohrung angeordneten, geteilten Lagerschalen zur Sicherung gegen Mitdrehen mit der Buchse über den dynamischen Ölfilm mittels radial nach außen stehender, in der Trennfuge von Lagerkörper und Lagerdeckel geklemmter Flansche fixiert sind.

Schließlich ist es aus der DE-A 2 557 972 bekannt, ein Lagersegment über eine gesonderte Abstützeinrichtung mittels Öl aus einem Schmiersystem dämpfend abzustützen.

Keiner der vorgenannten Druckschriften ist jedoch ein Hinweis zu entnehmen, zwischen Lagerkörper und Lagerdeckel über Flansche festgeklemmte Lagerschalen zum selbsttätig temperaturabhängigen Lagerspielausgleich zu verformen durch Wärmedehnung von Lagerkörper und Lagerdeckel quer zur Lager-Hauptbelastungsrichtung und dabei die verformten Bereiche der Lagerschalen jeweils hydraulisch gegen die Lagerbohrung im Lagerkörper und Lagerdeckel abzustützen.

Weitere vorteilhafte Ausgestaltungen sind in den Unteransprüchen beschrieben.

Die Erfindung ist anhand eines in der Zeichnung beispielsweise dargestellten Pleuels für eine Brennkraftmaschine beschrieben. Es zeigen:

Fig. 1 ein Pleuel mit einem geteilten Radial-Gleitlager im großen Pleuelauge,

Fig. 2 einen Längsschnitt durch das Pleuel gemäß der Linie II-II der Fig. 1

Fig. 3 eine weitere Ausgestaltung einer Lagerschale.

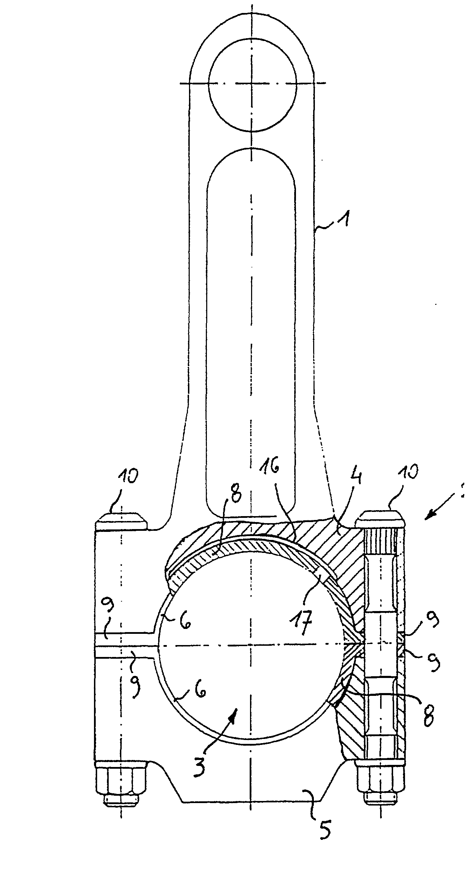

Ein Pleuel 1 einer nicht weiter dargestellten Brennkraftmaschine ist aus Aluminium gefertigt und weist im großen Pleuelauge 2 ein geteiltes Radial-Gleitlager 3 auf. Das große Pleuelauge 2 umfaßt einen Lagerkörper 4 und einen Lagerdeckel 5. Mit 6 sind geteilte Lagerschalen bezeichnet, deren Gleitflächen 7 an Stützkörpern 8 angeordnet sind. Die Lagerschalen 6 bzw. die Stützkörper 8 sind im Bereich der Stoßenden mit Flanschen 9 ausgebildet. Die Lagerschalen 6 bzw. die Stützkörper 8 sind einschließlich der angeformten Flansche 9 relativ starkwandig ausgebildet und bestehen aus einem Eisenwerkstoff, der bekanntlich gegenüber dem für das Pleuel verwendeten Aluminium einen etwa halb so großen Wärmeausdehnwert besitzt. Wie aus der Fig. 1 weiter hervorgeht, wird der Lagerdeckel 5 mittels Spannschrauben 10 unter Zwischenschaltung der Flansche 9 der Lagerschalen 6 gegen den Lagerkörper 4 des Pleuelauges 2 verspannt. Die Schrauben 10 sind jeweils mit einem den Lagerdeckel 5 am Lagerkörper 4 zentrierenden Bund 11 ausgerüstet. Wie aus dem geschnittenen Teil des Pleuelauges 2 weiter hervorgeht, weisen die Flansche 9 jeweils eine dem Zentrier-Bund 11 angepaßte Durchgangsbohrung 12 auf. Damit ist für die Flansche 9 neben der durch die Klemmhalterung bewirkten kraftschlüssigen Mitnahmeverbindung auch eine formschlüssige Mitnahmeverbindung erzielt. Damit ist jedoch auch sichergestellt, daß die Lagerschalen 6 bzw. die Stützkörper 8 bei einer temperaturbedingten Wärmedehnung des Pleuelauges 2 quer zur Pleuelachse 13 bzw. zur Hauptbelastungsrichtung aufgrund der unterschiedlich gewählten Werkstoffe mit verschiedenen Wärmeausdehnwerten verformt werden. Die Lagerschalen 6 bzw. die Stützkörper 8 werden hierbei oval verformt, wobei das Lagerspiel mit einem nicht gezeigten Lagerzapfen in der Hauptbelastungsrichtung gemäß der Pleuelachse 13 klein gehalten wird.

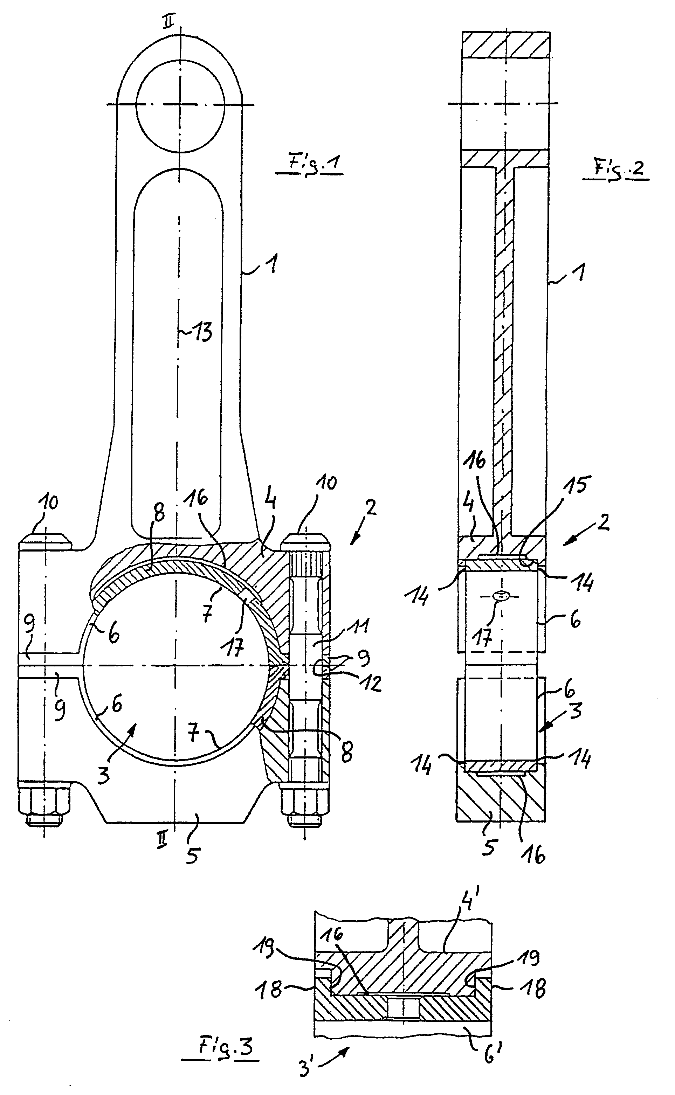

Für die Ovalverformung der Lagerschalen 6 sind diese im Lagerkörper 4 und Lagerdeckel 5 mit engem Spiel etwa radial beweglich geführt, wobei die Lagerschalen 6 gemäß Fig. 2 über ihre Stirnflächen 14 in einer Umfangsnut 15 im Lagerkörper 4 und Lagerdeckel 5 geführt angeordnet sind. Mit ihren den Gleitflächen 7 abgewandten Seiten begrenzen die Lagerschalen 6 bzw. Stützkörper 8 jeweils über einen Teilumfang eine Kammer 16, die mit Drucköl aus einem Schmiersystem der Machine beaufschlagt ist. Für die Zuführung von Drucköl weist die Lagerschale 6 im Bereich der Kammer 16 eine Zulaufbohrung 17 auf, die mit einer in einem Lagerzapfen vorgesehenen Versorgungsbohrung zumindest zeitweise in ölführender Verbindung steht. Bei einer Verformung der Lagerschalen 6 tritt Öl aus der Kammer 16 in den Spalt zwischen den Stützkörper 8 und den Grund der Umfangsnut 15 ein und stützt bei einer Belastung der Lagerschale 6 durch den nicht gezeigten Lagerzapfen diese gegen den Lagerkörper 4 bzw. den Lagerdeckel 5 ab. Durch die einerseits mit Spiel in die Umfangsnut 15 eingesetzten Lagerschalen 6 und durch die Zulaufbohrungen 17 andererseits ist eine gedämpfte Abstützung der verformten Lagerschalen 6 gegen den Lagerkörper 4 und den Lagerdeckel 5 erzielt.

Im Gegensatz zu den Lagerschalen 6 der Fig. 1 und 2 weisen die in Fig. 3 dargestellten Lagerschalen 6' an beiden Stirnenden jeweils einen radial auswärts gerichteten Bund 18 auf mit jeweils einer dem Lagerkörper 4' oder dem Lagerdeckel zugeordneten Führungsfläche 19. Diese Ausgestaltung wird bevorzugt zur Erzielung breiter Lagerflächen für ein insgesamt schmalbauendes Radial-Gleitlager 3 bzw. 3'.

**Patentansprüche**

1. Geteiltes Radial-Gleitlager mit selbsttätig temperaturabhängigem Lagerspielausgleich für Kraft- und Arbeitsmaschinen, insbesondere Pleuel, oder Kurbelwellenlager für Brennkraftmaschinen, bei dem ein Lagerkörper (4, 4') und ein Lagerdeckel (5) mittels Schrauben (10) gegenseitig verspannt sind, und mit einem Lagerzapfen über geteilte, in Lagerkörper und Lagerdeckel eingelegte Lagerschalen (6, 6') zusammenwirken, deren Gleitflächen (7) an Stützkörpern (8) ausgebildet sind, und wobei der Werkstoff für Lagerkörper und/oder Lagerdeckel des Gleitlagers (3) gegenüber dem des Lagerzapfens einen größeren Wärmeausdehnungswert aufweist, dadurch gekennzeichnet, daß die Stützkörper (8) der Lagerschalen (6, 6') aus einem Werkstoff bestehen, der gegenüber dem Werkstoff von Lagerkörper (4, 4') und/oder Lagerdeckel (5) einen wesentlich kleineren Wärmeausdehnungswert aufweist, daß die Stützkörper ferner im Bereich ihrer Stoßenden mit in der Trennfuge zwischen Lagerkörper (4, 4') und Lagerdeckel (5) anordbaren Flanschen (9) ausgerüstet sind, die vom zur Trennfuge in etwa parallel sich wärmedehnenden Lagerkörper und/oder Lagerdeckel mitnehmbar angeordnet sind und der Verformung der Lagerschale (n) (6, 6') dienen, wobei die jeweilige Lagerschale über ihre äußere Umfangsfläche im verformten Bereich gegen den Lagerkörper oder den Lagerdeckel hydraulisch abgestützt ist.

2. Gleitlager nach Anspruch 1, dadurch gekennzeichnet, daß Lagerkörper (4, 4') und Lagerdeckel (5) jeweils aus Leichtmetall und daß die Stützkörper (8) der Lagerschalen (6, 6') aus Eisenwerkstoff bestehen.

3. Gleitlager nach Anspruch 2, dadurch gekennzeichnet, daß die Schrauben (10) jeweils mit einem den Lagerdeckel (5) am Lagerkörper (4) zentrierenden Bund (11) ausgerüstet sind, und die Flansche (9) jeweils eine dem Zentrier-Bund (11) angepaßte Durchgangsbohrung (12) aufweisen.

4. Gleitlager nach einem oder mehreren der Ansprüche 1–3, dadurch gekennzeichnet, daß die Lagerschalen (6, 6') im Lagerkörper (4, 4') und/oder Lagerdeckel (5) mit engem Spiel radial beweglich angeordnet sind, und auf ihren den Gleitflächen (7) abgewandten Seiten über einen Teilumfang jeweils eine Kammer (16) begrenzen, die mit Drucköl aus einem Schmiersystem der Maschine beaufschlagt ist.

5. Gleitlager nach Anspruch 4, dadurch gekennzeichnet, daß die Lagerschalen (6) über ihre Stirnfläche (14) in einer Umfangsnut (15) im Lagerkörper (4) und Lagerdeckel (5) geführt angeordnet sind.

6. Gleitlager nach Anspruch 4, dadurch gekennzeichnet, daß die Lagerschalen (6') den beiden Stirnenden jeweils einen radial auswärts gerichteten Bund (18) mit jeweils einer dem Lagerkörper (4') oder dem Lagerdeckel zugeordneten Führungsfläche (19) aufweisen.

7. Gleitlager nach einem oder mehreren der Ansprüche 4–6, dadurch gekennzeichnet, daß jede Lagerschale (6, 6') im Bereich einer Kammer (16) eine Zulaufbohrung (17) aufweist, die mit einer in einem Lagerzapfen vorgesehenen Versorgungsbohrung zumindest zeitweise in ölführender Verbindung steht.

## Claims

1. A divided radial plain bearing with automatically temperature-dependent bearing play compensation for prime movers and engines, especially connecting rods, or crankshaft bearings for internal combustion engines, in which a bearing body (4, 4') and a bearing cap (5) are braced against one another by means of screws (10), and co-operate with a bearing journal through divided bearing shells (6, 6') inserted into bearing body and bearing cap, the sliding surfaces (7) of which are formed on support bodies (8), and in which the material for bearing body and/or bearing cap of the plain bearing (3) has a greater thermal expansion value than that of the bearing journal, characterised in that the support bodies (8) of the bearing shells (6, 6') consist of a material which has a substantially lower thermal expansion value than the material of bearing body (4, 4') and/or bearing cap (5), that the support bodies are further equipped, in the region of their abutting ends, with flanges (9) which can be arranged in the plane of separation between bearing body (4, 4') and bearing cap (5), the bearing bodies and/or bearing caps which expand thermally approximately parallel with the plane of separation are arranged to be entrainable and serve for the deformation of the bearing shell(s) (6, 6'), while the respective bearing shell is hydraulically supported through its external circumferential surface in the deformed region against the bearing body or the bearing cap.

2. A plain bearing according to Claim 1, characterised in that bearing body (4, 4') and bearing cap (5) are each light metal and that the support bodies (8) of the bearing shells (6, 6') consist of ferrous material.

3. A plain bearing according to Claim 2, characterised in that the screws (10) are equipped each with a collar (11) which centres the bearing cap (5) on the bearing body (4) and the flanges (9) each comprise a through-passing bore (12) adapted to the centring collar (11).

4. A plain bearing according to any one or more of Claims 1 to 3, characterised in that the bearing shells (6, 6') are arranged in the bearing body (4, 4') and/or bearing cap (5) radially movably with narrow play and each define a chamber (16) on their sides remote from the sliding faces (7) order a partial circumference, which chamber is charged with pressure oil from a lubrication system of the engine.

5. A plain bearing according to Claim 4, characterised in that the bearing shells (6) are arranged for guidance by means of their end faces (14) in a circumferential groove (15) in the bearing body (4) and bearing cap (5).

6. A plain bearing according to Claim 4, characterised in that the bearing shells (6') comprise a radially outwardly directed collar (18) on each of the two ends, each collar having a guide surface (19) allocated to the bearing body (4') or the bearing cap.

7. A plain bearing according to any one or more of Claims 4–6, characterised in that each bearing shell (6, 6') has a feed bore (17) in the region of a chamber (16), which is at least at times in oil-conducting connection with a supply bore provided in one bearing journal.

## Revendications

1. Palier lisse radial divisé, avec une compensation de jeu automatique en fonction de la température, pour moteurs et machines, notamment palier de bielle ou palier de vilebrequin pour moteurs à combustion interne, palier dans lequel: un corps de palier (4, 4') et un couvercle de palier (5) sont bridés l'un contre l'autre au moyen de vis (10), et coopèrent avec un tourillon de palier par l'intermédiaire de coquilles de coussinets (6, 6') insérées dans le corps de palier et dans le couvercle de palier, et dont les surfaces de glissement (7) sont réalisées sur des structures d'appui (8), le matériau utilisé pour le corps de palier et/ou le couvercle de palier de ce palier lisse (3) ayant un coefficient de dilatation thermique supérieur à celui du tourillon de palier, palier caractérisé en ce que: les structures d'appui (8) des coquilles de coussinets (6, 6') sont constituées d'un matériau qui a un coefficient de dilatation thermique notablement inférieur à celui du matériau constituant le corps de palier (4, 4') et/ou le couvercle de palier (5), les structures d'appui sont en outre équipées, dans la zone où leurs extrémités se rencontrent, de brides (9) susceptibles d'être disposées dans le joint de séparation entre le corps de palier (4, 4') et le couvercle de palier (5), ces brides sont disposées de façon à pouvoir être entraînées par le corps de palier et/ou le couvercle de palier se dilatant à peu près parallèlement au joint de séparation, et elles servent à la déformation de la coquille de coussinet ou des coquilles de coussinets (6, 6'), la coquille de coussinet considérée prend hydrauliquement appui, par l'intermédiaire de sa surface périphérique externe dans la zone déformée, contre le corps de palier ou bien contre le couvercle de palier.

2. Palier lisse selon la revendication 1, caractérisé en ce que le corps de palier (4, 4') et le couvercle de palier (5) sont respectivement en métal léger, tandis que les structures d'appui (8) des coquilles de coussinets (6, 6') sont en matériau ferreux.

3. Palier lisse selon la revendication 2, caractérisé en ce que les vis (10) sont respectivement équipées d'un bandeau (11) centrant le couvercle de palier (5) sur le corps de palier (4), et les brides (9) comportent respectivement un perçage traversant (12) adapté à ce bandeau de centrage (11).

4. Palier lisse selon une ou plusieurs des revendications 1 à 3, caractérisé en ce que les coquilles de coussinets (6, 6') sont mobiles radialement avec un léger jeu dans le corps de palier (4, 4') et/ou le couvercle de palier (5), et, sur leurs faces opposées à leurs surfaces de glissement (7), elles délimitent respectivement sur une partie de leur périphérie, une chambre (16), qui est alimentée en huile sous pression à partir d'un système de lubrification du moteur ou de la machine.

5. Palier lisse selon la revendication 4, caractérisé en ce que les coquilles de coussinets (6) sont guidées par l'intermédiaire de leurs faces frontales (14) dans une gorge périphérique (15) ménagée dans le corps de palier (4) et le couvercle de palier (5).

6. Palier lisse selon la revendication 4, caractérisé en ce que les coquilles de coussinets (6') comportent respectivement à leurs deux extrémités frontales, un bandeau (18) dirigé radialement vers l'extérieur, avec respectivement une surface de guidage (19) associée au corps de palier (4') ou bien au couvercle de palier (5).

7. Palier lisse selon une ou plusieurs des revendications 4 à 6, caractérisé en ce que chaque coquille de coussinet (6, 6') comporte dans la zone d'une chambre (16) un perçage d'alimentation (17), qui est au moins périodiquement en communication, pour laisser passer l'huile, avec un perçage d'alimentation dans le tourillon de palier.

EP 0 236 831 B1

Fig.1

Fig.2

Fig.3